# EUROPÄISCHE PATENTSCHRIFT

(11) **EP 0 742 942 B1**
(45) Veröffentlichungstag und Bekanntmachung des Hinweises auf die Patenterteilung: **01.07.1998**
(21) Anmeldenummer: 95908249.6
(22) Anmeldetag: 01.02.1995
(51) Int. Cl.: G11B 23/28

(54) **VERFAHREN ZUR KENNZEICHNUNG VON OPTISCH AUSLESBAREN PLATTENFÖRMIGEN INFORMATIONSTRÄGERN**
IDENTIFICATION PROCESS OF OPTICALLY READABLE DISK-SHAPED INFORMATION CARRIERS
PROCEDE D'IDENTIFICATION DE SUPPORTS D'INFORMATIONS A LECTURE OPTIQUE, SE PRESENTANT SOUS FORME DE DISQUES

(30) Priorität: 02.02.1994 DE 4403171
(43) Veröffentlichungstag der Anmeldung: 20.11.1996
(73) Patentinhaber: WARNER MUSIC MANUFACTURING EUROPE GmbH, D-52464 Alsdorf (DE)
(72) Erfinder: ERMACORA, Detlef, D-24220 Flintbek (DE)
(74) Vertreter: Klunker . Schmitt-Nilson . Hirsch
(86) Internationale Anmeldenummer: EP9500366
(87) Internationale Veröffentlichungsnummer: WO9521446

(56) Entgegenhaltungen:
- WO-A-86/04720
- DE-A- 3 810 276
- DE-A- 4 311 683
- DE-A- 4 321 799
- GB-A- 2 173 767

## Beschreibung

Die Erfindung betrifft ein Verfahren zur Kennzeichnung von optisch auslesbaren, plattenförmigen ton- und bildsignaltragenden Informationsträgern hoher Speicherdichte für Ton- und Bildsignale in Form von CDs.

Plattenförmige Informationsträger im Sinne der Erfindung sind beispielsweise Audio- und Video-CDs, Laserdisks, Minidisks, CDIs und CD-ROM. Zur Vereinfachung werden alle diese Informationsträger nachfolgend unter dem Begriff CD zusammengefaßt.

WO-A-86 04270 beschreibt ein Strichcodeetikett, das auf eine optische Platte aufgebracht wird und mit dessen Hilfe der Zugang zu den Daten auf den Platte limitiert wird.

Zur Verhinderung von Raubdrucken und Fälschungen, sowie zur Kennzeichnung des Herstellers werden CDs und ihre Verpackungen mit einer Reihe von Merkmalen versehen. So ist es beispielsweise bekannt, CDs und ihre Verpackungen mit einem Firmenlogo oder eine Katalognummer zu kennzeichnen. Falls die Kennzeichnung nur aufgedruckt oder aufgeklebt ist. läßt sie sich ohne Schwierigkeiten fälschen. Wenn sie in das Material der CD eingeprägt ist, muß die Spritzgußform entsprechend individualisiert sein und die durch erodierte Einsätze oder erodierte Kennzeichnungen individualisierten Formen bzw. Formhälften können nur für den speziellen Anwendungsfall, d.h. für eine kundenbezogene Fertigung eingesetzt werden.

Gleiches gilt für die Verpackungen. Da die Verpackungen üblicherweise von Drittherstellern bezogen werden, verteuert eine kundenspezifische oder artikelspezifische Kennzeichnung den Preis der Verpackungen. Darüber hinaus können die Verpackungen nicht als neutrale Standardteile beschafft werden, sondern nur von bestimmten Herstellern, wodurch der Wettbewerb ausgeschaltet wird.

Aufgabe der Erfindung ist eine Erhöhung der Fälschungssicherheit von CDs bzw. die Schaffung einer Möglichkeit Fälschungen und Raubdrucke leicht erkennen zu können.

Erfindungsgemäß wird diese Aufgabe dadurch gelöst, daß jede einzelne CD durch einen gesteuerten Laserstrahl mit einer direkt in das Grundmaterial eingebrachten, für jede CD charakteristischen Codierung versehen wird. Vorzugsweise wird auch die Verpackung der CD mit der gleichen Codierung versehen oder mit einer Codierung, die mit der Codierung der CD logisch verknüpft ist. Weitere Ausgestaltungen der Erfindung sind Gegenstand der Unteransprüche.

Die Erfindung nutzt die bekannte Eigenschaft von Laserstrahlschreibern mit Hilfe eines Laserstrahls entsprechender Energie die Oberfläche eines Werkstücks direkt zu markieren bzw. zu kennzeichnen. Durch die Energie des Laserstrahls finden in den durch den Strahl beaufschlagten Bereichen Materialumwandlungen und -zersetzungen statt, die zu einer Farbänderung des Materials, einem Verbrennen oder Verdampfen führen. Die auf diese Art eingebrachten Markierungen sind daher irreversibel und nicht fälschbar.

Die Form der Markierung bzw. der Inhalt der aufgezeichneten Informationen kann augenblicklich, d.h. von CD zu CD geändert werden, so daß jede CD mit einer individuellen, nur dieser CD zugeordneten Markierung versehen wird. Wenn auch die Verpackung der CD mit der gleichen Markierung versehen wird, ist eine eindeutige Zuordnung von Verpackung und Inhalt möglich. Die Aufbringung einer sich von CD zu CD ändernden Markierung ist möglich, da der Laserstrahl über ein Steuergerät programmgesteuert ist und in Sekundenbruchteilen umgesteuert werden kann.

Vorzugsweise wird der Laserstrahlschreiber in die Endverarbeitungslinie einer CD-Fertigung integriert, d.h. in diejenige Anlage, in welcher die CDs versandfertigt verpackt werden.

Moderne Endverarbeitungsmaschinen im CD-Bereich fahren mit einem Takt von 70 pro Minute. Das bedeutet, daß mindestens zwei Beschriftungen in einer Zeit von 0,8 Sekunden einschließlich der Rüstzeit erfolgen müssen. Am Markt befindliche Laserschreiber sind so schnell, daß sie in diesen Maschinentakt integriert werden können, ohne daß dadurch der Maschinentakt veriangsamt werden müßte.

Die Laserstrahlschreiber können auf verschiedene Art und Weise in die Endverarbeitungsmaschinen integriert werden. Üblicherweise werden die CDs in transparente Polystyrol-Verpackungen eingelegt, die nur mit einem CO² Lasersystem markiert werden können. In diesem Fall ist es vorteilhaft, zwei Druck- bzw. Schreibköpfe zu verwenden, die einerseits für die Beschriftung der Verpackung und andererseits für die Beschriftung der CD vorgesehen sind. Beide Druckköpfe werden über ein und dasselbe Steuergerät angesteuert, das Steuergerät bzw. das Steuerprogramm liefert im Maschinentakt jeweils einen neuen, individuellen Datensatz.

Bei bestimmten anderen transparenten Verpackungen ist es auch möglich, einen YAG-Laser zu verwenden. In einem solchen Fall kann ein einziger Druckkopf ausreichen, da die Codierung in einem einzigen Arbeitsgang sowohl in die Verpackung, als auch in die bereits in der Verpackung befindliche CD eingeschrieben werden kann.

Der Informationsinhalt der Codierung ist in weiten Grenzen veränderbar. Im einfachsten Fall handelt es sich um eine fortlaufende Seriennummer. Die Codierung kann jedoch auch noch zusätzliche Informationen über den Hersteller bzw. die Nummer der Endverarbeitungsmaschine beinhalten, sowie das Herstellungsdatum, die Anzahl der verpackten Träger pro Orderlinie und eine Kundencodierung. Diese Aufzählung ist nicht abschließend. Statt der fortlaufenden Seriennummer kann auch eine Zufallszahl verwendet werden, die von einem entsprechenden Generator im Maschinentakt zur Verfügung gestellt wird.

Die Plazierung der Codierung auf den CDs ist beliebig. Vorzugsweise wird die Codierung in der Nähe des Mittellochs angeordnet, d.h. im nicht metallisierten Bereich. Die Anordnung der Codierung auf der Verpackung ist beliebig. Vorzugsweise sollte die Codierung von außen sichtbar sein, um Händler und Kunden, ohne die Notwendigkeit die Verpackung zu öffnen, eine Möglichkeit zur Überprüfung zu geben.

Durch die Markierung jeder CD und der ihr zugeordneten Verpackung mit einer individuellen Codierung ist es Hersteller, Händler und Kunden jederzeit möglich, die Herkunft und Echtheit, d.h. autorisierte Herstellung einer CD festzustellen. Der Hersteller kann bei Nachfragen jederzeit darüber Auskunft geben, ob das Produkt in seiner Betriebsstätte gefertigt wurde oder nicht. Auch der Händler hat vor Ort die Möglichkeit, strichprobenartig die Ware zu kontrollieren. Das neue Verfahren bietet somit eine wirksame Möglichkeit, die sich immer mehr ausbreitende Produktpiraterie einzudämmen.

## Patentansprüche

1. Verfahren zur Kennzeichnung von optisch auslesbaren plattenförmigen ton- und bildsignaltragenden Informationsträgern hoher Speicherdichte in Form von CDs, **dadurch gekennzeichnet,** daß jede CD durch einen gesteuerten Laserstrahl mit einer direkt in das Grundmaterial eingebrachten, für jede CD charakteristischen Codierung versehen wird.

2. Verfahren nach Anspruch 1, **dadurch gekennzeichnet**, daß auch die Verpackung der CD durch einen gesteuerten Laserstrahl mit einer Codierung versehen wird, die mit der Codierung der CD in einen bestimmten Verhältnis steht, so daß CD und Verpackung einander zugeordnet werden können.

3. Verfahren nach Anspruch 2, **dadurch gekennzeichnet,** daß die Beschriftung der CDs und ihrer Verpackung in der CD-Endverarbeitungslinie erfolgt.

4. Verfahren nach Anspruch 3, **dadurch gekennzeichnet,** daß der Laserstrahl zur Beschriftung einer CD und ihrer Verpackung von einem nur dieser CD zugeordneten, individuellen Datensatz gesteuert wird.

5. Verfahren nach Anspruch 4, **dadurch gekennzeichnet,** daß die Beschriftung der CD und ihrer Verpackung durch zwei Druckköpfe eines Laserstrahldruckers erfolgt.

6. Verfahren nach Anspruch 4, **dadurch gekennzeichnet,** daß die Beschriftung einer CD und ihrer Verpackung durch einen Druckkopf erfolgt, der Verpackung und CD gleichzeitig in einem Arbeitsschritt markiert.

7. Verfahren nach einem der Ansprüche 1 bis 6, **dadurch gekennzeichnet,** daß die Codierung der CD und ihrer Verpackung eine fortlaufende Seriennummer oder individuelle Zufallszahl ist.

8. Verfahren nach Anspruch 7, **dadurch gekennzeichnet,** daß die Codierung zusätzlich noch Informationen über den Hersteller und/oder den Kunden und/oder das Datum und/oder die Anzahl der gleichartigen CDs enthält.

9. Verfahren nach einem der Ansprüche 2 bis 6, **dadurch gekennzeichnet,** daß die Codierung auf CD und Verpackung gleich ist.

10. Verfahren nach einem der Ansprüche 2 bis 8, **dadurch gekennzeichnet**, daß die Codierung auf der CD bzw. ihrer Verpackung einen Teil der Codierung der Verpackung bzw. der CD darstellt.

11. Verfahren nach einem der Ansprüche 2 bis 8, **dadurch gekennzeichnet,** daß die Codierungen auf CD und Verpackung logisch verknüpft sind.

12. Verfahren nach einem der Ansprüche 2 bis 11, **dadurch gekennzeichnet,** daß die Codierung von CD und Verpackung im Takt der Endverarbeitungsmaschine erfolgt.

13. Verfahren nach einem der Ansprüche 1 bis 12, **dadurch gekennzeichnet,** daß zur Beschriftung der CD und ihrer Verpackung ein CO₂-Laser verwendet wird.

14. Verfahren nach einem der Ansprüche 1 bis 13, **dadurch gekennzeichnet,** daß die Energie des Laserstrahls so bemessen wird, daß die Codierung direkt in das Grundmaterial der CD bzw. ihrer Verpackung eingebrannt wird.

15. Optisch auslesbare Informationsträger für Ton- und Bildsignale in Form von Audio- und Video-CDs, **dadurch gekennzeichnet**, daß die CD eine mit einem Laserstrahl direkt in das Grundmaterial der CD, getrennt von Audio- und Video-Daten eingebrachte, für jede CD charakteristische Codierung aufweist.

16. Informationsträger nach Anspruch 15, **dadurch gekennzeichnet,** daß die Verpackung der CD die gleiche Codierung wie die CD oder eine Codierung aufweist, die mit der Codierung der CD logisch verknüpft ist.

17. Endverarbeitungsmaschine zur Verpackung von optisch auslesbaren Informationsträgern in Form von Audio- und Video-CDs, **dadurch gekennzeichnet,** daß in der Maschine ein Laserstrahldrucker mit zwei Druckköpfen integriert ist und die Druckköpfe jede CD und die ihr zugeordnete Verpackung im Arbeitstakt mit einer für die CD und ihre Verpackung charakteristischen Codierung versehen.

## Claims

1. A method for marking optically readable disklike information carriers bearing audio and video signals and having high storage density in the form of CDs, characterized in that each CD is provided by a controlled laser beam with a coding incorporated directly in the basic material and characteristic of each CD.

2. The method of claim 1, characterized in that the package of the CD is also provided by a controlled laser beam with a coding having a definite relation with the coding of the CD so that CD and package can be associated with each other.

3. The method of claim 2, characterized in that the CDs and their packages are inscribed in the CD final processing line.

4. The method of claim 3, characterized in that the laser beam for inscribing a CD and its package is controlled by an individual data record associated only with this CD.

5. The method of claim 4, characterized in that the CD and its package are inscribed by two printheads of a laser beam printer.

6. The method of claim 4, characterized in that a CD and its package are inscribed by a printhead which marks package and CD simultaneously in one working step.

7. The method of any of claims 1 to 6, characterized in that the coding of the CD and its package is a consecutive serial number or individual random number.

8. The method of claim 7, characterized in that the coding additionally contains information about the manufacturer and/or the customer and/or the date and/or the number of like CDs.

9. The method of any of claims 2 to 6, characterized in that the coding is the same on CD and package.

10. The method of any of claims 2 to 8, characterized in that the coding on the CD constitutes part of the coding of the package, or vice versa.

11. The method of any of claims 2 to 8, characterized in that the codings on CD and package are logically combined.

12. The method of any of claims 2 to 11, characterized in that CD and package are coded with each cycle of the final processing machine.

13. The method of any of claims 1 to 12, characterized in that a CO₂ laser is used for inscribing the CD and its package.

14. The method of any of claims 1 to 13, characterized in that the energy of the laser beam is dimensioned such that the coding is burned directly into the basic material of the CD or its package.

15. Optically readable information carriers for audio and video signals in the form of audio and video CDs, characterized in that the CD has a coding incorporated with a laser beam directly in the basic material of the CD separately from audio and video data and characteristic of each CD.

16. The information carriers of claim 15, characterized in that the package of the CD has the same coding as the CD or a coding logically combined with the coding of the CD.

17. A final processing machine for packaging optically readable information carriers in the form of audio and video CDs, characterized in that a laser beam printer with two printheads is integrated in the machine and the printheads provide each CD and the associated package with a coding characteristic of the CD and its package with each work cycle.

## Revendications

1. Procédé pour marquer des supports de données en forme de plaques pouvant être lus optiquement contenant des signaux de sons et d'images à haute densité de stockage sous la forme de disques compacts caractérisé en ce que chaque disque compact est pourvu d'un codage caractéristique de chaque disque compact introduit directement dans le matériau de base à l'aide d'un rayon laser guidé.

2. Procédé selon la revendication 1, caractérisé en ce que l'emballage du disque compact est aussi pourvu d'un codage par un rayon laser guidé, qui a une certaine relation avec le codage du disque compact de telle façon que le disque compact et l'emballage puissent être associés l'un à l'autre.

3. Procédé selon la revendication 2, caractérisé en ce que l'inscription du disque compact et de son emballage a lieu dans la ligne de production finale du disque compact.

4. Procédé selon la revendication 3, caractérisé en ce que le rayon laser destiné à l'inscription d'un disque compact et de son emballage est commandé par un jeu de données individuel associé à ce seul disque compact.

5. Procédé selon la revendication 4, caractérisé en ce que l'inscription du disque compact et de son emballage a lieu à l'aide de deux têtes d'impression d'une machine à imprimer par rayon laser.

6. Procédé selon la revendication 4, caractérisé en ce que l'inscription d'un disque compact et de son emballage a lieu à l'aide d'une tête d'impression qui marque simultanément dans une seule opération l'emballage et le disque compact.

7. Procédé selon l'une quelconque des revendications 1 à 6, caractérisé en ce que le codage du disque compact et de son emballage est l'un d'une suite continue de numéros de série ou un nombre aléatoire individuel.

8. Procédé selon la revendication 7, caractérisé en ce que le codage contient de plus des informations concernant le fabricant et / ou le client et / ou la date et / ou le nombre de disques compacts du même type.

9. Procédé selon l'une quelconque des revendications 2 à 6, caractérisé en ce que le codage sur le disque compact et sur l'emballage est le même.

10. Procédé selon l'une quelconque des revendications 2 à 8, caractérisé en ce que le codage sur le disque compact respectivement son emballage représente une partie du codage de l'emballage respectivement du disque compact.

11. Procédé selon l'une quelconque des revendications 2 à 8, caractérisé en ce que les codages sur le disque compact et sur l'emballage sont associés logiquement.

12. Procédé selon l'une quelconque des revendications 2 à 11, caractérisé en ce que le codage du disque compact et de l'emballage a lieu à la cadence de la machine de production finale.

13. Procédé selon l'une quelconque des revendications 1 à 12, caractérisé en ce que l'inscription du disque compact et de son emballage utilise un laser à CO₂.

14. Procédé selon l'une quelconque des revendications 1 à 13, caractérisé en ce que l'énergie du rayon laser est déterminée de façon à graver directement le codage dans le matériau de base du disque compact respectivement de son emballage.

15. Support de données lisible optiquement pour des signaux de sons et d'images sous la forme de disques compacts audio et vidéo, caractérisé en ce que le disque compact présente un codage caractéristique de chaque disque compact séparé des données audio et vidéo introduit directement dans le matériau de base du disque compact à l'aide d'un rayon laser.

16. Support de données selon la revendication 15, caractérisé en ce que l'emballage du disque compact présente le même codage que le disque compact ou un codage qui est associé logiquement avec le codage du disque compact.

17. Machine de production finale pour l'emballage de supports de données pouvant être lus optiquement sous la forme de disques compacts audio et vidéo, caractérisée en ce qu'une machine à imprimer à rayon laser comprenant deux têtes d'impression est intégrée dans la machine et en ce que les têtes d'impression confèrent à la cadence de travail à chaque disque compact et à l'emballage qui lui est associé un codage caractéristique du disque compact et son emballage.
